# EUROPEAN PATENT APPLICATION

(11) **EP 3 062 550 A1**
(43) Date of publication of application: **31.08.2016**
(21) Application number: 14855107.0
(22) Date of filing: 14.10.2014
(51) Int. Cl.: H04W 24/04, H04W 28/16, H04W 76/06, H04W 92/20

(54) **BASE STATION DEVICE, COMMUNICATION DEVICE, CONTROL METHOD, AND PROGRAM**

(30) Priority: 23.10.2013 JP 2013220473
(71) Applicant: KDDI Corporation, Tokyo 163-8003 (JP)
(72) Inventor: FUSHIKI, Masashi, Fujimino-shi Saitama 356-8502 (JP); AKIMOTO, Yosuke, Fujimino-shi Saitama 356-8502 (JP); KITAGAWA, Koichiro, Fujimino-shi Saitama 356-8502 (JP); KONISHI, Satoshi, Fujimino-shi Saitama 356-8502 (JP)
(74) Representative: Pitchford, James Edward
(86) International application number: PCT/JP2014/005204
(87) International publication number: WO 2015/059899

(57) **Abstract**

Provided is a base station device in a radio communication system in which a communication device is capable of connecting to the base station device and a first other base station device simultaneously. The base station device receives, from the communication device, a notification indicating that a failure has occurred in a radio link between the communication device and the first other base station device, and upon receiving the notification, transmits a first message indicating the occurrence of the failure to the first other base station device. Upon receiving the first message, the first other base station device releases a connection between itself and the communication device.

## Description

### TECHNICAL FIELD

The present invention relates to a base station device, a communication device, a communication method, and a program, and specifically to a connection control technique used in a radio communication system.

### BACKGROUND ART

In a radio communication system, radio communication is performed while a terminal is connected to at least one of geographically dispersed base stations. For accurate signal reception, radio communication requires that the radio quality of a signal at the receiving side, such as a received power and a signal-to-interference-plus-noise ratio, be kept at a predetermined level or higher, and that a radio link be problem-free.

### CITATION LIST

### NON PATENT LITERATURE

NPL 1: Samsung, R1-131830, "Discussion on Dual RRC," 3GPP TSG RAN WG2#82, May 2013

### SUMMARY OF INVENTION

### TECHNICAL PROBLEM

In an LTE system, if a terminal (UE) detects the occurrence of a radio problem between itself and a base station device (eNB), the UE waits for a predetermined time period in order to determine whether an RLF has occurred. If the radio problem remains unsolved when the predetermined time period has elapsed, the UE determines that an RLF has occurred, and attempts, for another predetermined time period, to reconnect to the eNB to which the UE was connected. If this reconnection attempt by the UE during another predetermined time period fails, the radio link is disconnected.

The foregoing method gives rise to the problem that radio resources related to the radio link are not released until the elapse of the other predetermined time period, thus radio resources are wasted for an extremely long time. Another problem is that, as the UE attempts to connect to another eNB after the reconnection failure, it takes a great amount of time for the UE to start connection switchover processing.

The present invention has been made in view of the above problems, and aims to reduce at least one of the following time periods: a time period from the occurrence of a radio link failure until the release of radio resources, and a time period until a terminal starts connection to a base station device different from a base station device to which the terminal was connected up to the occurrence of the radio link failure.

### SOLUTION TO PROBLEM

A base station device according to one aspect of the present invention is included in a radio communication system in which a communication device is capable of connecting to the base station device and a first other base station device simultaneously, and the base station device includes: receiving means for receiving, from the communication device, a notification indicating that a failure has occurred in a radio link between the communication device and the first other base station device; and transmission means for transmitting, upon receiving the notification, a first message indicating the occurrence of the failure to the first other base station device. Upon receiving the first message, the first other base station device releases a connection between the first other base station device and the communication device.

A base station device according to another aspect of the present invention is included in a radio communication system in which a communication device is capable of connecting to the base station device and a first other base station device simultaneously, and the base station device includes: receiving means for periodically receiving, from the communication device, a notification related to a first radio quality of a radio link between the communication device and the first other base station device; and transmission means for transmitting, when the first radio quality is at or below a predetermined level, to the first other base station device, a first message indicating that a failure has occurred in the radio link. Upon receiving the first message, the first other base station device releases a connection between the first other base station device and the communication device.

A base station device according to still another aspect of the present invention is included in a radio communication system in which a communication device is capable of connecting to the base station device and a first other base station device simultaneously, and the base station device includes: receiving means for receiving, from the communication device, a notification that is related to a first radio quality of a radio link between the communication device and the first other base station device and that is transmitted when a failure has occurred in the radio link; and transmission means for transmitting, upon receiving the notification, a first message indicating the occurrence of the failure to the first other base station device. Upon receiving the first message, the first other base station device releases a connection between the first other base station device and the communication device.

A communication device according to still another aspect of the present invention is capable of connecting to a first base station device and a second base station device simultaneously, and includes transmission means for transmitting, when a failure has occurred in a radio link to the second base station device, a notification indicating the occurrence of the failure to the first base station device. The transmission of the notification controls the first base station device to cause the second base station device to release a connection between the second base station device and the communication device.

A communication device according to still another aspect of the present invention is capable of connecting to a first base station device and a second base station device simultaneously, and includes transmission means for periodically transmitting, to the first base station device, a notification related to a first radio quality of a radio link to the second base station device. The transmission of the notification controls the first base station device to cause the second base station device to release a connection between the second base station device and the communication device when the notification indicates that the first radio quality is at or below a predetermined level.

A communication device according to still another aspect of the present invention is capable of connecting to a first base station device and a second base station device simultaneously, and includes transmission means for transmitting, when a failure has occurred in a radio link to the second base station device, to the first base station device, a notification related to a first radio quality of the radio link. The transmission of the notification controls the first base station device to cause the second base station device to release a connection between the second base station device and the communication device.

### ADVANTAGEOUS EFFECTS OF INVENTION

The present invention enables a reduction in at least one of the following time periods: a time period from the occurrence of a radio link failure until the release of radio resources, and a time period until a terminal starts connection to a base station device different from a base station device to which the terminal was connected up to the occurrence of the radio link failure.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate an embodiment(s) of the invention, and together with the description, serve to explain the principles of the present invention.
FIG. 1 is a conceptual diagram showing an exemplary arrangement of a macrocell and small cells that use different frequency bands;
FIG. 2 is a conceptual diagram showing an example of communication between a terminal and a plurality of eNBs as per Dual Connectivity;
FIG. 3 shows an example of a hardware configuration of a base station device (eNB) and a communication device (terminal);
FIG. 4 is a block diagram showing an example of a functional configuration of an eNB;
FIG. 5 is a block diagram showing an example of a functional configuration of a terminal;
FIG. 6 is a sequence diagram showing an exemplary flow of processing through to eNB's detection of an occurrence of a radio link failure;
FIG. 7 is a sequence diagram showing another exemplary flow of processing through to eNB's detection of the occurrence of a radio link failure;
FIG. 8 is a sequence diagram showing still another exemplary flow of processing through to eNB's detection of the occurrence of a radio link failure;
FIG. 9 is a sequence diagram showing an exemplary flow of processing after detection of a radio link failure;
FIG. 10 is a sequence diagram showing another exemplary flow of processing after detection of a radio link failure; and
FIG. 11 is a sequence diagram showing still another exemplary flow of processing after detection of a radio link failure.

### DESCRIPTION OF EMBODIMENTS

An embodiment of the present invention will now be described in detail with reference to the accompanying drawings.

### (Radio Communication System)

The present embodiment is premised on a radio communication system utilizing Dual Connectivity (see NPL 1) discussed in the movement for standardization of LTE Release 12 by the 3^{rd} Generation Partnership Project (3GPP). In view of this, Dual Connectivity will be described first.

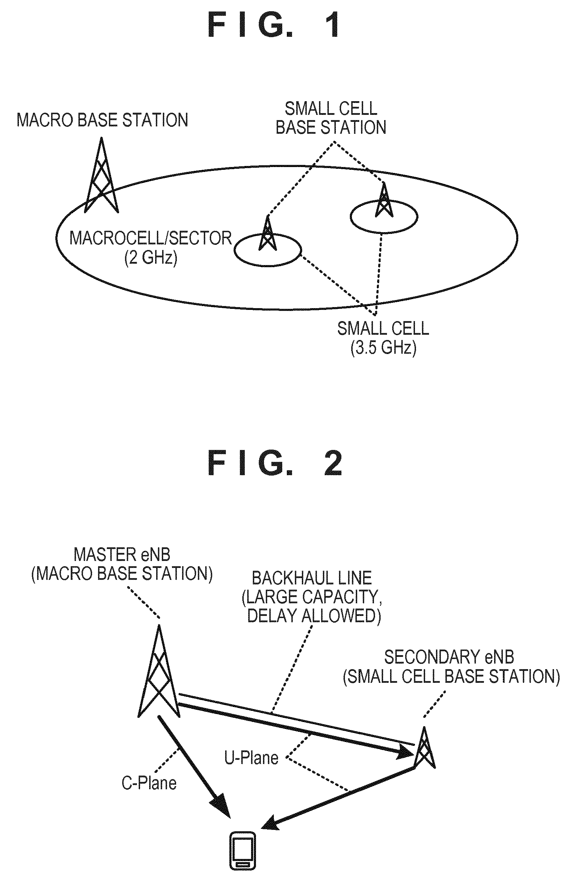

Currently, the 3GPP has given rise to a discussion about the installation of many small cells within the coverage of a large cell (macrocell) whereby that the small cells use a different frequency band (e.g., a frequency band higher than a frequency band used by the macrocell). For instance, as shown in the example of FIG. 1, a plurality of small cells that use a 3.5-GHz frequency band are stationed within the coverage area of a macrocell that uses a 2-GHz frequency band.

In this environment, Dual Connectivity enables two types of base station devices to operate in coordination in a layer above a media access control (MAC) layer. The two types of base station devices are a master eNB (e.g., a macro base station) that takes the initiative in communication control, and a secondary eNB (e.g., a small cell base station) that operates based on the communication control.
As per Dual Connectivity, the two types of base station devices are connected by a wired or radio backhaul line, and it is expected that the transmission traffic to a terminal is passed to the secondary eNB via the master eNB, for example. At this time, a downstream signal arrives at the terminal by being transmitted as a radio signal directly from the master eNB to the terminal, or by being transferred from the master eNB to the secondary eNB and then transmitted as a radio signal from the secondary eNB to the terminal. On the other hand, an upstream signal arrives at the master eNB by being transmitted directly from the terminal to the master eNB, or by being transmitted from the terminal to the secondary eNB and then transferred from the secondary eNB to the master eNB. In some cases, communication between the terminal and another apparatus that is connected directly to the secondary eNB bypasses the master eNB.

Although the backhaul line is required to have a large capacity, e.g., 1 Gbps, the requirement for the backhaul line with regard to a delay is, for example, at least 10 ms is thus not relatively strict. Therefore, as shown in FIG. 2, Dual Connectivity causes highly real-time data, such as control data for maintaining mobility (C-plane), and voice call traffic, to be transmitted from the master eNB to the terminal. On the other hand, best-effort user data that need not be real-time (U-plane), such as data for web browsing, is transmitted from the secondary eNB to the terminal. This enables data offloading to the secondary eNB without performing a handover in association with connection to the secondary eNB.

Although the following description is premised on the system adopting LTE, the system may be another radio communication system as long as the system enables the terminal to connect to a plurality of base station devices simultaneously. The terminal is a mobile or fixed radio communication device, and may be compatible with a non-LTE radio communication system. Although there is only one secondary eNB in the example of FIG. 2, a plurality of secondary eNBs may be provided, and the terminal may be connected to one master eNB and the plurality of secondary eNBs. Furthermore, although there is only one terminal in the example of FIG. 2, the following discussion applies not only to this case, but also to a case in which one or more terminals are provided. The secondary eNB need not always be associated with one specific master eNB, and may be associated with any master eNBs selected from among a plurality of master eNBs, depending on the situation.

Conventionally, if a terminal determines that a radio link failure (RLF) has occurred, the terminal attempts to reconnect to an eNB to which the terminal was connected up until the occurrence of the RLF, and after the reconnection fails, the terminal attempts to connect to another eNB. At this time, the terminal does not have information regarding another eNB serving as a connection switchover destination, thus giving rise to the problem that a great amount of time is required to establish a connection with another eNB. Furthermore, until the reconnection fails, the eNB to which the terminal was connected up until the occurrence of the RLF, continues to transmit a signal addressed to the terminal, that is to say, radio resources are continuously allocated to the terminal. This gives rise to the problem of radio resources being wasted.

In contrast, the present embodiment solves the foregoing problems by utilizing Dual Connectivity. It is conceivable that for a terminal in a Dual Connectivity state there is a failure-free radio link to a certain eNB (e.g., a master eNB) even if a failure has occurred in a radio link to another eNB (e.g., a secondary eNB). In view of this, for example, if an RLF occurs between a terminal in a Dual Connectivity state and a first eNB, the present embodiment causes the terminal to notify a second eNB of the occurrence of the RLF. The second eNB that has been notified of the occurrence of the RLF transmits a message indicating the occurrence of the RLF to the first eNB via a backhaul line to release a failure-affected radio link. Upon receiving the message, the first eNB releases radio connection to the terminal, thereby releasing radio resources. This can prevent the first eNB from continuously allocating the radio resources to the terminal for a long period of time, and prevent radio resources being wasted. The second eNB may transmit, to the terminal, a notification indicating that the terminal is to release the connection to the first eNB and shift to a Single Connectivity state. Thus the terminal refrains from attempting to reconnect to the first eNB, thereby suppressing battery consumption by the terminal to a minimum.

In the present embodiment, in a state where an RLF has occurred in the radio link between the terminal and the first eNB, the first eNB or the RLF-free second eNB may determine a third eNB that is different from the first and second eNBs, as a connection switchover destination for the terminal. In this case, the second eNB notifies the terminal of information regarding the third eNB. The terminal then executes processing for connection to the third eNB using the notified information regarding the switchover destination, i.e., the third eNB. Conventionally, a switchover between connection destinations has required an extremely large amount of time because information regarding a switchover destination eNB is collected after a connection to a switchover source eNB has been disconnected. In contrast, in the present embodiment, a switchover between connection destinations can be performed at high speed because, as stated earlier, the terminal can obtain the information regarding the switchover destination eNB from the eNB with which connection has already been established.

As such, the present embodiment utilizing Dual Connectivity controls an RLF-free eNB to cause an RLF-affected eNB to release the connection to the terminal and release radio resources, thereby suppressing the wastage of radio resources. Furthermore, as the terminal is notified of the release of connection to the eNB to which the terminal was originally connected, the terminal refrains from attempting reconnection to that eNB, and hence battery consumption by the terminal can be suppressed. Moreover, in some cases, the RLF-free eNB notifies the terminal of information of an eNB serving as a connection switchover destination, thereby enabling the terminal to switch to the eNB serving as the connection switchover destination at high speed.

The configurations and the aforementioned operations of an eNB and a terminal will now be described in detail.

### (Hardware Configuration of eNB and Terminal)

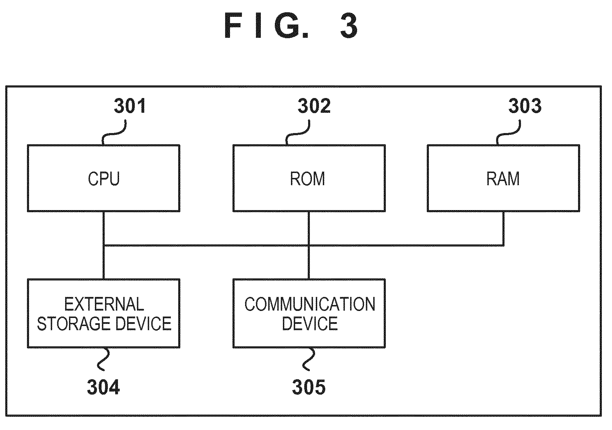

FIG. 3 shows an example of a hardware configuration of an eNB (a base station device, a master eNB, or a secondary eNB) and a terminal (a mobile/fixed communication device).
In one example, the eNB and the terminal have a hardware configuration similar to the one shown in FIG. 3, including a CPU 301, a ROM 302, a RAM 303, an external storage device 304, and a communication device 305. In the eNB and the terminal, for example, the CPU 301 executes a program that is recorded in one of the ROM 302, the RAM 303, and the external storage device 304, that realizes the following functions of the eNB and the terminal. Furthermore, in the eNB and the terminal, for example, the CPU 301 controls the communication device 305 to perform communication between the master or secondary eNB and the terminal, or to perform inter-eNB communication between the master eNB and the secondary eNB.

Although the eNB and the terminal include one communication device 305 in FIG. 3, the eNB may include, for example, a communication device for inter-eNB communication and a communication device for communication with the terminal. The terminal may include, for example, a plurality of communication devices in one-to-one correspondence with a plurality of frequency bands.

The eNB and the terminal may include dedicated hardware that executes the following functions, or may execute part of the following functions using hardware and the remaining part of the following functions using a computer that runs the program. The eNB and the terminal may execute all of the following functions using the computer and the program.

### (Functional Configuration of eNB)

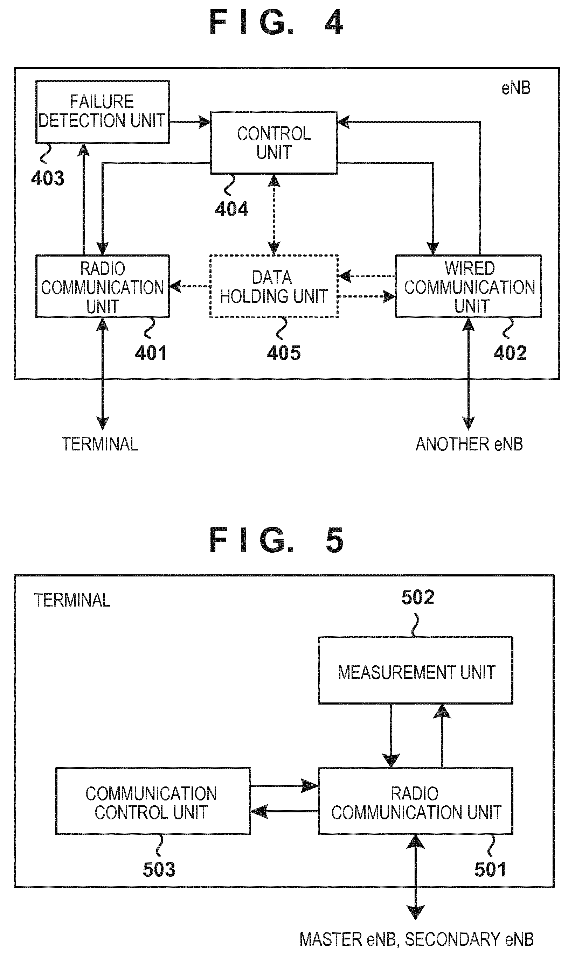

FIG. 4 is a block diagram showing an example of a functional configuration of an eNB. The eNB includes, for example, a radio communication unit 401, a wired communication unit 402, a failure detection unit 403, and a control unit 404. The eNB may, depending on the case, further include a data holding unit 405. The eNB can be a master eNB or a secondary eNB. Although the eNB can further include other functional units that are included in an ordinary eNB, a description of such functional units is omitted in the present embodiment for the sake of simplicity.

The radio communication unit 401 is a functional unit that performs radio communication with a terminal. The wired communication unit 402 is a functional unit that performs wired communication with another eNB via, for example, an X2 interface. The failure detection unit 403 detects, from a signal received via the radio communication unit 401, whether a failure has occurred in a radio link between another eNB and the terminal. For example, the control unit 404 issues an instruction related to communication control to another eNB by transmitting a message to another eNB via the wired communication unit 402 by controlling the radio communication unit 401 based on the state of radio links between the terminal and a plurality of eNBs. Although the wired communication unit 402 performs communication with another eNB in the description of the present embodiment, no restriction is intended in this regard, and communication with another eNB may be performed via a radio line, for example.

Now, the operations of the eNB will be briefly explained. First, a description is given of an exemplary case in which a failure has occurred in a radio link between another eNB and the terminal.

At first, the radio communication unit 401 waits for a signal related to the state of the radio link from the terminal. It is assumed that, at this time, the radio communication unit 401 is transmitting data to the terminal via a downlink in parallel. The signal related to the state of the radio link is, for example, a notification indicating that a failure has occurred in the radio link between the terminal and another eNB. The signal related to the state of the radio link may include information related to the radio quality of the radio link between the terminal and another eNB. Such a signal related to the state of the radio link, including the information related to the radio quality, may be periodically transmitted from the terminal. In this case, the terminal receives the radio quality of received signals in radio links to a plurality of eNBs to which the terminal is currently connected (e.g., reference signal received powers, reference signal received quality, and signal-to-interference-plus-noise ratios), and the radio quality related to a signal that is receivable from another eNB with a significant power. The information related to the radio quality may be transmitted on the occurrence of the failure separately from the notification indicating the occurrence of the failure, or as information indicating the occurrence of the failure. Information included in the signal related to the state of the radio link received by the radio communication unit 401 is input to the failure detection unit 403.

Based on the input information, the failure detection unit 403 detects whether a failure has occurred in the radio link between the terminal and another eNB. For example, when the notification indicating the occurrence of a failure per se has been received from the terminal, the failure detection unit 403 detects that a failure has occurred in the radio link between the terminal and another eNB based on the notification. On the other hand, for example, when the terminal transmits the information regarding the radio quality of the radio link between the terminal and another eNB on the occurrence of a failure in the radio link, the occurrence of a failure in the radio link is detected upon input of the information regarding the radio quality. Furthermore, when the terminal periodically transmits the information regarding the radio quality, the failure detection unit 403 detects, based on the information, that a failure has occurred in the radio link between the terminal and another eNB if the radio quality has dropped to a predetermined level or lower. The failure detection unit 403 may determine that the RLF has occurred if a predetermined time period has elapsed with the radio quality remaining in the state where it has dropped to the predetermined level or lower. The failure detection unit 403 may continue to observe the radio quality for a longer time period if there is a tendency toward improvement in the radio quality, and may promptly determine that an RLF has occurred if there is a tendency toward deterioration in the radio quality. If a failure is detected, the control unit 404 is notified of the detection.

Upon receiving the notification indicating the occurrence of a failure in the radio link between the terminal and another eNB, the control unit 404 generates a message indicating the occurrence of the failure in the radio link between the terminal and another eNB, and transmits the message to the other eNB via the wired communication unit 402. This message transmitted to the other eNB, in which a failure is occurring in the radio link to the terminal, serves as a notification indicating that radio connection to the terminal is to be cancelled. Upon receiving this notification, the other eNB releases radio connection to the terminal, thereby releasing radio resources.

When a failure has occurred in the radio link between the terminal and another eNB, the control unit 404 further controls the radio communication unit 401 to transmit, to the terminal, a message indicating that radio connection to the other eNB is to be released. The terminal that has received this message refrains from executing reconnection processing with respect to the failure-affected radio link to the other eNB (and processing for shifting to connect to still another eNB). As reconnection processing is not executed in response to the release of radio connection between the terminal and the other eNB, battery consumption by the terminal can be suppressed.

The control unit 404 may determine an eNB serving as a connection switchover destination, for example, based on information regarding the radio quality received from the terminal. Alternatively, the RLF-affected eNB may determine the eNB serving as the connection switchover destination. In this case, information regarding the eNB that has been determined as the connection switchover destination is obtained via the wired communication unit 402. When the RLF-affected eNB does not have information related to the radio quality of radio links between other eNBs and the terminal, the RLF-free eNB may notify the RLF-affected eNB of this information. Once the eNB serving as the switchover destination has been determined, the control unit 404 controls the radio communication unit 401 to transmit, to the terminal, information related to the eNB serving as the connection switchover destination in place of the message indicating that radio connection to another eNB is to be released. This information related to the eNB serving as the switchover destination enables the terminal to, for example, establish a connection with the eNB serving as the switchover destination.

For example, when the failure detection unit 403 has detected the occurrence of a failure in the radio link between the terminal and another eNB, the wired communication unit 402 transmits, to the other eNB, the message indicating that radio connection to the terminal is to be released. Furthermore, for example, when the control unit 404 has determined still another eNB serving as the connection switchover destination for the terminal, the control unit 404 controls the wired communication unit 402 to transmit, to the still another eNB, a message requesting connection to the terminal. Thereafter, if the wired communication unit 402 receives a message indicating approval of the request, the control unit 404 controls the radio communication unit 401 to transmit, to the terminal, information related to the aforementioned eNB serving as the switchover destination after the approval.

The wired communication unit 402 may receive, from another eNB undergoing the RLF, data that is to be transmitted to the terminal (e.g., data that failed to be transmitted). Alternatively, the wired communication unit 402 may receive, from another eNB undergoing RLF, only information that specifies the data to be transmitted to the terminal (e.g., an ID of the data), and obtain the data held in the data holding unit 405 by specifying the data using the ID. For example, when the eNB is a master eNB, this configuration can be realized if the master eNB temporarily holds data to be transmitted by another eNB (secondary eNB), which is interrelated as per Dual Connectivity, during transfer of the data. The data thus obtained to be transmitted to the terminal is transferred to the eNB serving as the switchover destination if an eNB serving as the switchover destination exists, or is transmitted by radio to the terminal via the radio communication unit 401 if the eNB serving as the switchover destination does not exist.

Next, a description is given of an exemplary case in which a failure has occurred in the radio link between the eNB itself and the terminal, but has not occurred in the radio link between another eNB and the terminal.

In this case, the eNB can recognize the occurrence of an RLF as a result of the wired communication unit 402 receiving, from another eNB, a message indicating the occurrence of the RLF. The control unit 404 then controls the radio communication unit 401 to release the radio connection to the terminal. This enables prompt release of radio resources following the occurrence of the RLF, thereby preventing radio resources from being wasted. The control unit 404 also controls the wired communication unit 402 to transmit data to be transmitted to the terminal, or information that specifies the data, to the eNB that transmitted the message indicating the occurrence of the RLF. In this way, the data to be transmitted to the terminal can be completely transmitted to the terminal.

Upon receiving the message indicating the occurrence of an RLF from another eNB, the control unit 404 may determine still another eNB serving as a connection switchover destination for the terminal. In this case, the control unit 404 controls the wired communication unit 402 to transmit information of the eNB that has been determined as the switchover destination to the eNB that transmitted the message indicating the occurrence of an RLF. A master eNB may always determine a connection switchover destination regardless of whether an RLF has occurred between the master eNB and the terminal, or between a secondary eNB and the terminal. In this case, for example, even when a failure has occurred in a radio link between the master eNB and the terminal, the master eNB determines a master eNB serving as a switchover destination, and notifies the secondary eNB of the master eNB serving as the switchover destination. The secondary eNB then notifies the terminal of information related to the master eNB serving as the switchover destination. Also when a failure has occurred in a radio link between the secondary eNB and the terminal, the master eNB determines a secondary eNB serving as a switchover destination, and notifies the terminal of the secondary eNB serving as the switchover destination. Similarly, a secondary eNB may always determine an eNB serving as a switchover destination. Alternatively, an RLF-affected eNB may always determine an eNB serving as a switchover destination for continuing communication in place of the RLF-affected eNB, or an RLF-free eNB may always determine an eNB serving as a switchover destination for continuing communication in place of another RLF-affected eNB. It is assumed that the "determination" is complete upon approval of a switchover request that has been transmitted to an eNB serving as a switchover destination via a backhaul line. Information regarding an eNB that has been determined as a switchover destination is always transmitted from an RLF-free eNB to the terminal.

### (Configuration of Terminal)

FIG. 5 is a block diagram showing an example of a functional configuration of the terminal. The terminal includes, for example, a radio communication unit 501, a measurement unit 502, and a communication control unit 503. The radio communication unit 501 is a functional unit that performs radio communication with an eNB(s). In a Dual Connectivity state, the terminal is connected to one master eNB and one or more secondary eNBs simultaneously. The measurement unit 502 measures, for example, whether a failure has occurred in radio links to the eNBs, or the radio quality of received signals, such as received signal powers or signal-to-interference-plus-noise ratios. When a failure has occurred in the radio links, the related detection result and radio quality measurement result are transmitted to the eNBs via the radio communication unit 501. The communication control unit 503 controls the radio communication unit 501.

For example, when the terminal detects an RLF in a radio link to a first eNB, the terminal notifies a second eNB connected as per Dual Connectivity of the RLF via the radio communication unit 501. By controlling the second eNB, the terminal can instruct the first eNB to release the connection to the terminal. Thereafter, if the terminal receives, from the second eNB, a message instructing a shift to Single Connectivity, the terminal releases the radio connection to the first eNB, and maintains only the radio connection to the second eNB. From then on, the terminal receives only signals from the second eNB. This can suppress battery consumption attributed to the terminal attempting to reconnect to the first eNB or to connect to another eNB.

On the other hand, when the terminal receives, from the second eNB, information related to a third eNB serving as a connection switchover destination, the terminal establishes a connection with the third eNB based on the information. That is to say, the terminal performs a switchover from simultaneous connection to the first and second eNBs, to simultaneous connection to the second and third eNBs. At this time, as the terminal has been notified of the information related to the third eNB, the terminal can receive a synchronization signal and an annunciation signal from the third eNB without executing separate processing for determining an eNB serving as a switchover destination, that is to say, the terminal can promptly establish synchronization and obtain system information. As a result, a connection with the third eNB can be promptly established, and a switchover between connection destinations can be accelerated.

In order to determine the third eNB, the terminal may notify the second eNB of information regarding the radio quality, including the radio quality of a received signal from the third eNB, either in addition to or in place of the notification indicating the RLF detection. The terminal itself may not determine the occurrence of an RLF; instead, for example, the terminal may transmit, to an eNB that is currently connected to the terminal, a notification indicating the result of measuring the radio quality of an eNB from which a signal is received with a significant power, and the eNB that has received the notification may determine the occurrence of the RLF. In this case, an RLF-free eNB notifies the terminal of the occurrence of the RLF in a radio link between the terminal and another eNB. The radio quality is, for example, a reference signal received power, a reference signal received quality, or a signal-to-interference-plus-noise ratio (SINR). For example, the terminal transmits the result of measuring a CQI to an RLF-free eNB that is currently connected to the terminal, either periodically or at the occurrence of an RLF. Alternatively, the terminal transmits, to the RLF-free eNB, information regarding the reference signal received power (RSRP) or the reference signal received quality (RSRQ) in addition to the notification indicating the occurrence of an RLF. In this way, the terminal can provide an eNB with information that is necessary for the eNB to shift to Single Connectivity or to determine an eNB serving as a connection switchover destination.

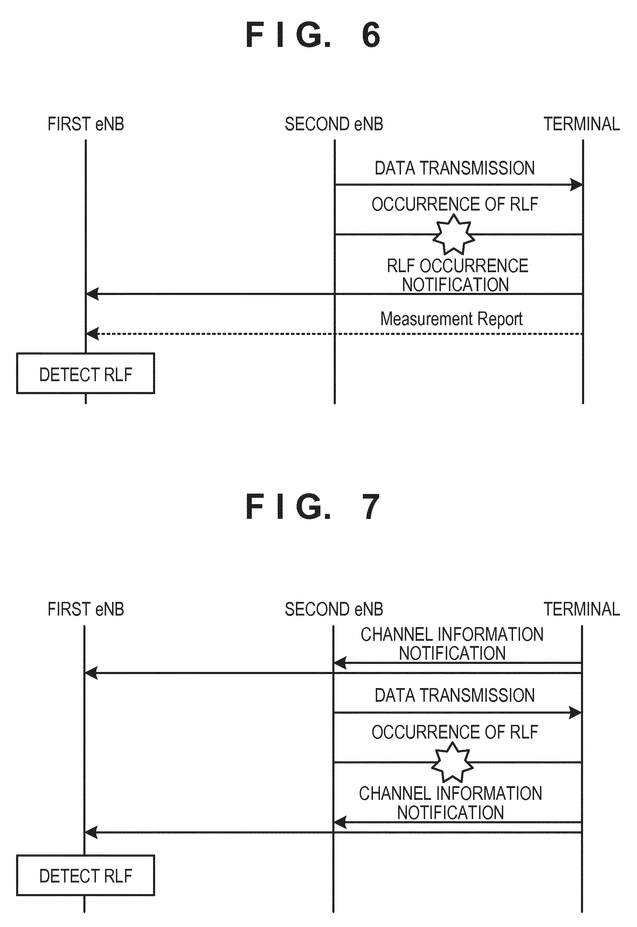

With reference to FIGS. 6 to 11, a description is now given of the flow of various types of processing in the radio communication system according to the present embodiment.

### (Flow of Processing from Occurrence of RLF to Detection of RLF)

First, with reference to FIGS. 6 to 8, a description is given of the flow of a case in which an RLF has occurred between the terminal and one of eNBs connected to the terminal as per Dual Connectivity, through to the detection of the RLF by another one of the eNBs. In the following description, it is assumed that a failure has occurred in a radio link between the terminal and a second eNB, but has not occurred between the terminal and a first eNB. Either of the first and second eNBs can be a master eNB.

In the example of FIG. 6, the terminal detects the RLF, and notifies the RLF-free first eNB of the occurrence of the RLF. In this case, the terminal may separately transmit a Measurement Report to the first eNB. The Measurement Report is, for example, a signal indicating a reference signal received power (RSRP) or a reference signal received quality (RSRQ). In this example, the first eNB detects the occurrence of an RLF between the second eNB and the terminal through receiving the notification indicating the occurrence of the RLF.

In the example of FIG. 7, the terminal periodically notifies eNBs that are currently connected to the terminal of channel information that includes information about the radio quality of signals received from a plurality of eNBs, including the first and second eNBs. The information about the radio quality is, for example, channel quality indicators (CQIs). On the occurrence of an RLF, a corresponding radio quality drops to a predetermined level or lower. The first eNB monitors information about the radio quality between the second eNB and the terminal, and detects the occurrence of an RLF in the radio link between the second eNB and the terminal if the radio quality is at or below the predetermined level, or if the state where the radio quality is equal to or lower than the predetermined level lasts for a predetermined time period or longer. The first eNB may change a time period for which monitoring is continued, depending on whether there is a tendency toward improvement in the radio quality, or whether there is a tendency toward deterioration in the radio quality.

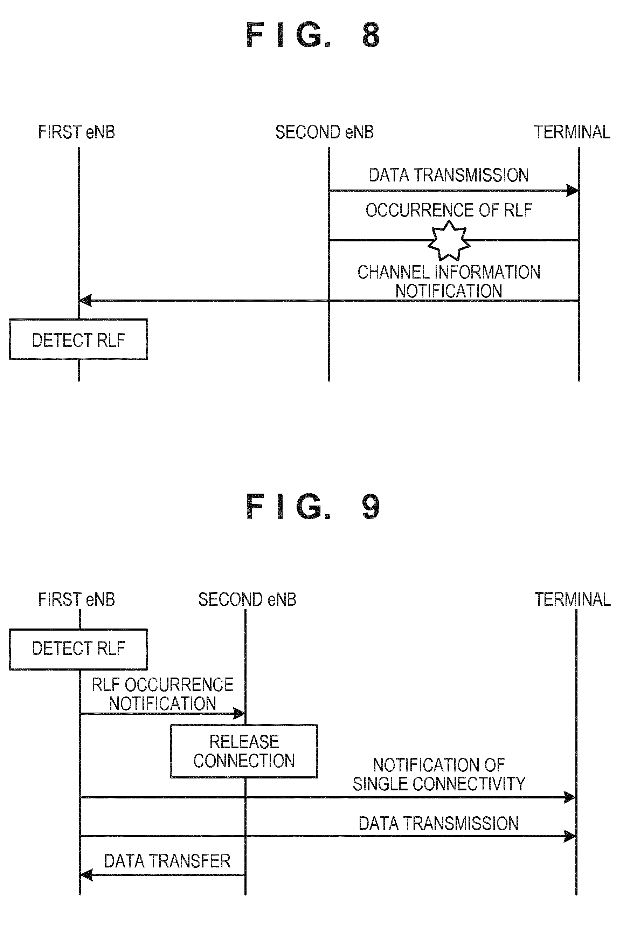

Referring to the example of FIG. 8, the notification indicating the occurrence of the RLF in the example of FIG. 6 is replaced with a channel information notification. In this case, the first eNB can detect the occurrence of the RLF in the radio link between the second eNB and the terminal through receiving the channel information notification. The terminal may periodically transmit the channel information notification while a reception level is equal to or lower than a predetermined level, e.g., at the occurrence of the RLF. In this case, the first eNB may detect the occurrence of an RLF in the radio link between the second eNB and the terminal if the following state lasts for a predetermined time period or longer: the radio quality of a received signal from the second eNB, which is included in the channel information notification, is equal to or lower than a predetermined level.

In the cases of FIGS. 7 and 8, as the channel information notification includes the information about the radio quality, the first eNB can, for example, determine an eNB serving as a connection switchover destination without a Measurement Report. Nevertheless, the terminal may transmit the Measurement Report or equivalent information to the first eNB as additional information. Similarly, in the case of FIG. 6, the terminal may transmit information equivalent to the channel information notification, to the first eNB.

### (Flow of Processing after RLF Detection)

A description is now given of processing after the first eNB has detected the RLF as in any of FIGS. 6 to 8.

FIG. 9 shows processing in which the first eNB transmits, to the terminal, a notification indicating that the terminal is to shift from Dual Connectivity to Single Connectivity. The first eNB determines the shift to Single Connectivity, for example, when no other eNBs with radio quality equal to or higher than a predetermined level received from the terminal are non-existent, or when the remaining amount of data to be transmitted to the terminal is small. When the terminal is in a Dual Connectivity state,
the first eNB may always cause the terminal to shift to Single Connectivity at the occurrence of a failure in the radio link between the second eNB and the terminal.

In the example of FIG. 9, the first eNB that has detected the RLF first notifies the second eNB of the occurrence of the RLF in the radio link between the second eNB and the terminal. Upon receiving this notification, the second eNB releases radio connection to the terminal. The first eNB also transmits, to the terminal, a notification indicating that the terminal is to shift to Single Connectivity. Upon receiving this notification, the terminal disconnects the connection to the second eNB. Thus, the terminal ends an attempt to reconnect to the second eNB.

Thereafter, the first eNB transmits, to the terminal, data that was scheduled to be transmitted from the second eNB to the terminal. The data that was scheduled to be transmitted from the second eNB is transferred from the second eNB to the first eNB via a backhaul line. When the first eNB holds the data that was scheduled to be transmitted from the second eNB to the terminal, e.g., when the first eNB is a master eNB, the second eNB may notify the first eNB of information that specifies the data (e.g., a data ID). The data transferred to the first eNB, i.e., the data that was scheduled to be transmitted is, for example, data that was transmitted from the second eNB at or after the occurrence of the RLF but failed in transmission (or identification information of the data). The first eNB can specify the time of the occurrence of the RLF in accordance with a notification received from the terminal.

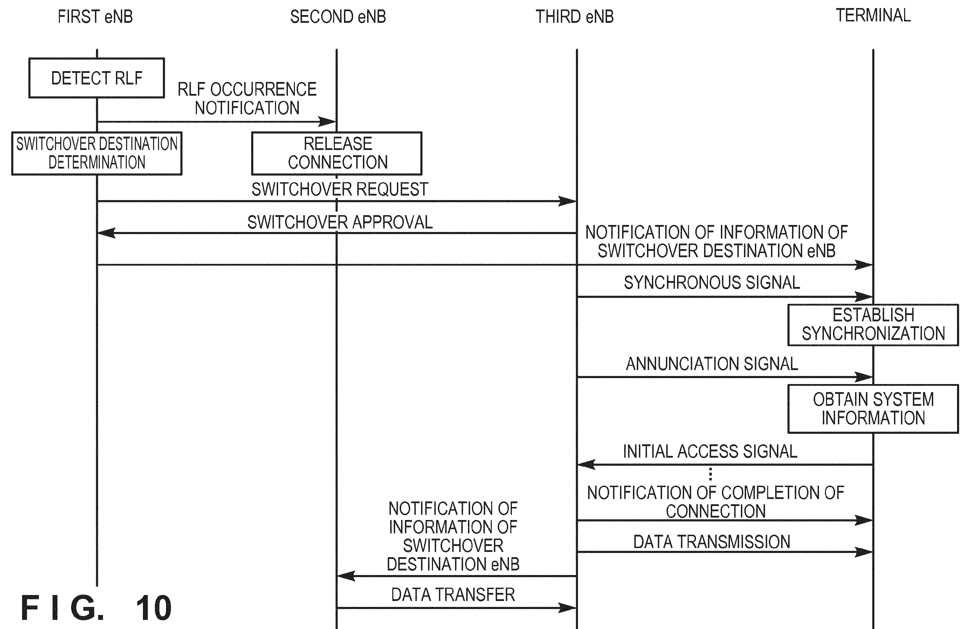

FIG. 10 shows processing for a case in which, after detecting the occurrence of an RLF in the radio link between the second eNB and the terminal, the first eNB determines an eNB serving as a connection switchover destination, that is to say, Dual Connectivity is maintained. In the example of FIG. 10, the first eNB notifies the second eNB of the RLF, and determines a third eNB as the eNB serving as the switchover destination. The first eNB also transmits, to the third eNB, a switchover request indicating a switchover from the second eNB. Upon receiving the switchover request, the third eNB notifies the first eNB of a switchover approval if the third eNB can perform the switchover. Upon receiving the notification of the switchover approval, the first eNB transmits, to the terminal, information for connection to the third eNB as information regarding the connection switchover destination. Although processing for determining the switchover destination is executed after the notification of the occurrence of the RLF in the example of FIG. 10, the determination and the notification may be made simultaneously, or the second eNB may be notified of the occurrence of the RLF after the switchover destination has been determined. This makes possible the following configuration, for example: the terminal attempts to reconnect to the second eNB until the switchover destination is determined, and once the switchover destination has been determined, the terminal stops processing for reconnecting to the second eNB and switches to another connection destination.

Upon receiving the information, the terminal starts processing for connection to the third eNB. The terminal establishes synchronization through receiving a synchronization signal from the third eNB, and obtains system information through receiving an annunciation signal from the third eNB. The terminal establishes a connection with the third eNB through exchange of a predetermined signal in accordance with a connection protocol.

Thereafter, the third eNB transmits data that was scheduled to be transmitted from the second eNB to the terminal. For example, the third eNB transmits, to the second eNB, a notification indicating that the third eNB has been determined as the connection switchover destination, and then the second eNB transfers the data to the eNB serving as the connection switchover destination as indicated by the notification. For example, when the first eNB is a master eNB, the first eNB may notify the second eNB of the connection switchover destination (the third eNB). In this case, the second eNB may transfer the data that was scheduled to be transmitted to the terminal, or transmit information that specifies the data, to the first eNB, and then the first eNB may transfer the data to the third eNB. When the second eNB has obtained the information regarding the third eNB from the first eNB, the second eNB may transfer the data directly to the third eNB rather than to the first eNB.

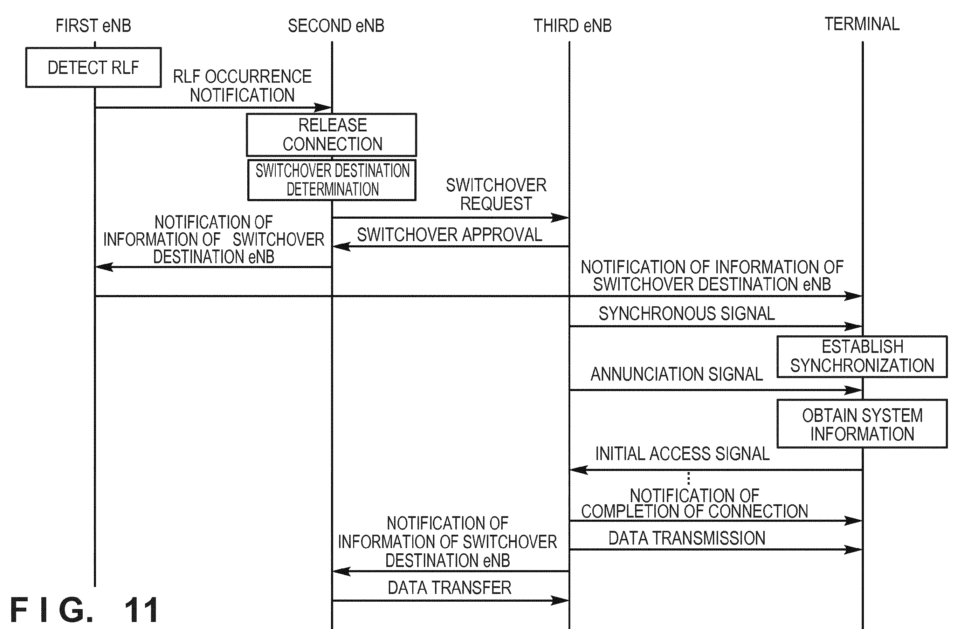

In FIG. 11, the RLF-effected second eNB determines an eNB serving as a connection switchover destination. This configuration is adopted when, for example, the second eNB is a master eNB. Upon receiving a notification indicating the occurrence of an RLF, the second eNB determines an eNB (e.g., the third eNB) that is to transmit data to the terminal in place of the second eNB. The second eNB then transmits a switchover request to the third eNB that has been determined as the connection switchover destination, and receives a switchover approval. Thereafter, the second eNB transmits information regarding the connection switchover destination (i.e., information of the third eNB) to the first eNB in which no failure is occurring in the radio link to the terminal. Upon receiving the information regarding the connection switchover destination, the first eNB transmits the information to the terminal. Subsequent processing is similar to that of FIG. 10.

As described above, the radio communication system according to the present embodiment utilizes Dual Connectivity to take advantage of the high possibility of the presence of an RLF-free eNB in the event of an RLF between one eNB and the terminal. The RLF-free eNB detects the occurrence of an RLF from a signal received from the terminal, and instructs the RLF-affected eNB to release the radio connection to the terminal. This can prevent radio resources from being monopolized despite an RLF state. It is also possible to suppress battery consumption by the terminal attributed to continuous attempts to reconnect to the eNB in the RLF state.

Furthermore, to maintain the Dual Connectivity state, the RLF-free eNB can notify the terminal of information regarding a connection switchover destination. This allows the terminal to promptly end processing for reconnection to the RLF-affected eNB, and to swiftly proceed with processing for connection to an eNB serving as the switchover destination. As the terminal is notified of the information regarding the connection switchover destination, the terminal need not execute processing for deciding on the eNB serving as the switchover destination, thereby swiftly establishing a connection with the eNB serving as the connection switchover destination.

The present invention is not limited to the above embodiment(s) and various changes and modifications can be made within the spirit and scope of the present invention. Therefore, to apprise the public of the scope of the present invention, the following claims are made.

This application claims the benefit of priority from Japanese Patent Application No. 2013-220473, filed October 23, 2013, which is hereby incorporated by reference herein in its entirety.

## Claims

1. A base station device in a radio communication system in which a communication device is capable of connecting to the base station device and a first other base station device simultaneously, the base station device comprising:
receiving means for receiving, from the communication device, a notification indicating that a failure has occurred in a radio link between the communication device and the first other base station device; and
transmission means for transmitting, upon receiving the notification, a first message indicating the occurrence of the failure to the first other base station device, wherein
upon receiving the first message, the first other base station device releases a connection between the first other base station device and the communication device.

2. A base station device in a radio communication system in which a communication device is capable of connecting to the base station device and a first other base station device simultaneously, the base station device comprising:
receiving means for periodically receiving, from the communication device, a notification related to a first radio quality of a radio link between the communication device and the first other base station device; and
transmission means for transmitting, when the first radio quality is at or below a predetermined level, to the first other base station device, a first message indicating that a failure has occurred in the radio link, wherein
upon receiving the first message, the first other base station device releases a connection between the first other base station device and the communication device.

3. A base station device in a radio communication system in which a communication device is capable of connecting to the base station device and a first other base station device simultaneously, the base station device comprising:
receiving means for receiving, from the communication device, a notification related to a first radio quality of a radio link between the communication device and the first other base station device, the notification being transmitted when a failure has occurred in the radio link; and
transmission means for transmitting, upon receiving the notification, a first message indicating the occurrence of the failure to the first other base station device, wherein
upon receiving the first message, the first other base station device releases a connection between the first other base station device and the communication device.

4. The base station device according to claim 2 or 3, wherein
the first radio quality includes a signal-to-interference-plus-noise ratio of a signal received by the communication device.

5. The base station device according to any one of claims 1 to 4, wherein
the transmission means further transmits, to the communication device, a second message indicating that the connection to the first other base station device is to be released.

6. The base station device according to claim 5, wherein
after the first message has been transmitted, the receiving means further receives, from the first other base station device, data that is in the first other base station device and that is to be transmitted to the communication device, and
the transmission means further transmits the received data to the communication device.

7. The base station device according to claim 5, further comprising:
holding means for holding data that is to be transmitted from the first other base station device to the communication device, wherein
after the first message has been transmitted, the receiving means further receives, from the first other base station device, information specifying the data that is in the first other base station device and that is to be transmitted to the communication device, and
the transmission means further transmits the data specified by the information to the communication device.

8. The base station device according to any one of claims 1 to 4, wherein
the transmission means further transmits, to the communication device, a third message indicating that a switchover is to be from simultaneous connection to the base station device and the first other base station device, to simultaneous connection to the base station device and a second other base station device.

9. The base station device according to claim 8, wherein
the third message includes information that is used by the communication device to connect to the second other base station device.

10. The base station device according to claim 8 or 9 dependent on any one of claims 2 to 4, further comprising
determining means for determining, based on the information related to the first radio quality, the second other base station device to which the communication device is to connect.

11. The base station device according to claim 8 or 9, wherein
the receiving means further receives, from the communication device, information related to a second radio quality related to a signal received by the communication device, and
the base station device further includes a determining means for determining, based on the information related to the second radio quality, the second other base station device to which the communication device is to connect.

12. The base station device according to claim 11, wherein
the second radio quality includes a reference signal received power or a reference signal received quality of a signal that the communication device has received from the second other base station device.

13. The base station device according to claim 8 or 9, further comprising
obtainment means for obtaining information regarding the second other base station device that has been determined by the first other base station device, wherein
the first other base station device determines the second other base station device upon receiving the first message.

14. The base station device according to any one of claims 8 to 13, wherein
data that is in the first other base station device and that is to be transmitted to the communication device is transferred to the second other base station device.

15. The base station device according to claim 14, wherein
the data that is held in the first other base station device and that is to be transmitted to the communication device is transferred to the second other base station device by the receiving means receiving, from the first other base station device, the data that is in the first other base station device and that is to be transmitted to the communication device, and by the transmission means transmitting the received data to the second other base station device.

16. The base station device according to claim 14, further comprising
holding means for holding data that is to be transmitted from the first other base station device to the communication device, wherein
the data that is held in the first other base station device and that is to be transmitted to the communication device is transferred to the second other base station device by the receiving means receiving, from the first other base station device, after the first message has been transferred, information specifying the data that is in the first other base station device and that is to be transmitted to the communication device, and by the transmission means transmitting the data specified by the information to the second other base station device.

17. A communication device capable of connecting to a first base station device and a second base station device simultaneously, the communication device comprising
transmission means for transmitting, when a failure has occurred in a radio link to the second base station device, a notification indicating the occurrence of the failure to the first base station device, wherein
transmitting the notification controls the first base station device to cause the second base station device to release a connection between the second base station device and the communication device.

18. A communication device capable of connecting to a first base station device and a second base station device simultaneously, the communication device comprising
transmission means for periodically transmitting, to the first base station device, a notification related to a first radio quality of a radio link to the second base station device, wherein
transmitting the notification controls the first base station device to cause the second base station device to release a connection between the second base station device and the communication device when the notification indicates that the first radio quality is at or below a predetermined level.

19. A communication device capable of connecting to a first base station device and a second base station device simultaneously, the communication device comprising
transmission means for transmitting, when a failure has occurred in a radio link to the second base station device, to the first base station device, a notification related to a first radio quality of the radio link, wherein
transmitting the notification controls the first base station device to cause the second base station device to release a connection between the second base station device and the communication device.

20. The communication device according to claim 18 or 19, wherein
the first radio quality includes a signal-to-interference-plus-noise ratio of a signal received by the communication device.

21. The communication device according to any one of claims 17 to 20, further comprising:
receiving means for receiving a message; and
control means for performing control to release the connection to the second base station device when a message indicating that the connection to the second base station device is to be released has been received from the first base station device.

22. The communication device according to any one of claims 17 to 20, further comprising:
receiving means for receiving a message; and
control means for performing control to switch from first simultaneous connection to second simultaneous connection when a message indicates that a switchover is to be from the first simultaneous connection to the second simultaneous connection has been received from the first base station device, the first simultaneous connection meaning simultaneous connection to the first base station device and the second base station device, and the second simultaneous connection meaning simultaneous connection to the first base station device and a third base station device.

23. The communication device according to claim 22, wherein
the transmission means further transmits, to the first base station device, information related to a second radio quality related to a signal received by the communication device.

24. The communication device according to claim 23, wherein
the second radio quality includes a reference signal received power or a reference signal received quality of a signal that the communication device has received from the third base station device.

25. A control method for a base station device in a radio communication system in which a communication device is capable of connecting to the base station device and a first other base station device simultaneously, the control method comprising:
a receiving step in which receiving means receives, from the communication device, a notification indicating that a failure has occurred in a radio link between the communication device and the first other base station device; and
a transmitting step in which transmission means transmits, upon receiving the notification, a first message indicating the occurrence of the failure to the first other base station device, wherein
upon receiving the first message, the first other base station device releases a connection between the first other base station device and the communication device.

26. A control method for a base station device in a radio communication system in which a communication device is capable of connecting to the base station device and a first other base station device simultaneously, the control method comprising:
a receiving step in which receiving means periodically receives, from the communication device, a notification related to a first radio quality of a radio link between the communication device and the first other base station device; and
a transmitting step in which transmission means transmits, when the first radio quality is at or below a predetermined level, to the first other base station device, a first message indicating that a failure has occurred in the radio link, wherein
upon receiving the first message, the first other base station device releases a connection between the first other base station device and the communication device.

27. A control method for a base station device in a radio communication system in which a communication device is capable of connecting to the base station device and a first other base station device simultaneously, the control method comprising:
a receiving step in which receiving means receives, from the communication device, a notification related to a first radio quality of a radio link between the communication device and the first other base station device, the notification being transmitted when a failure has occurred in the radio link; and
a transmitting step in which transmission means transmits, upon receiving the notification, a first message indicating the occurrence of the failure to the first other base station device, wherein
upon receiving the first message, the first other base station device releases a connection between the first other base station device and the communication device.

28. A control method for a communication device capable of connecting to a first base station device and a second base station device simultaneously, the control method comprising
a step in which, when a failure has occurred in a radio link to the second base station device, transmission means transmits a notification indicating the occurrence of the failure to the first base station device, and transmitting the notification controls the first base station device to cause the second base station device to release a connection between the second base station device and the communication device.

29. A control method for a communication device capable of connecting to a first base station device and a second base station device simultaneously, the control method comprising
a step in which transmission means periodically transmits, to the first base station device, a notification related to a first radio quality of a radio link to the second base station device, and transmitting the notification controls the first base station device to cause the second base station device to release a connection between the second base station device and the communication device when the notification indicates that the first radio quality is at or below a predetermined level.

30. A control method for a communication device capable of connecting to a first base station device and a second base station device simultaneously, the control method comprising
a step in which, when a failure has occurred in a radio link to the second base station device, transmission means transmits, to the first base station device, a notification related to a first radio quality of the radio link, and transmitting the notification controls the first base station device to cause the second base station device to release a connection between the second base station device and the communication device.

31. A program for causing a computer provided in a base station device that includes transmission means for transmitting a signal and receiving means for receiving a signal, and that is included in a radio communication system in which a communication device is capable of connecting to the base station device and a first other base station device simultaneously, to execute:
a step of controlling the receiving means to receive, from the communication device, a notification indicating that a failure has occurred in a radio link between the communication device and the first other base station device; and
a step of, upon receiving the notification, controlling the transmission means to transmit a first message indicating the occurrence of the failure to the first other base station device, wherein
upon receiving the first message, the first other base station device releases a connection between the first other base station device and the communication device.

32. A program for causing a computer provided in a base station device that includes transmission means for transmitting a signal and receiving means for receiving a signal, and that is included in a radio communication system in which a communication device is capable of connecting to the base station device and a first other base station device simultaneously, to execute:
a step of controlling the receiving means to periodically receive, from the communication device, a notification related to a first radio quality of a radio link between the communication device and the first other base station device; and
a step of, when the first radio quality it or below a predetermined level, controlling the transmission means to transmit, to the first other base station device, a first message indicating that a failure has occurred in the radio link, wherein
upon receiving the first message, the first other base station device releases a connection between the first other base station device and the communication device.

33. A program for causing a computer provided in a base station device that includes transmission means for transmitting a signal and receiving means for receiving a signal, and that is included in a radio communication system in which a communication device is capable of connecting to the base station device and a first other base station device simultaneously, to execute:
a step of controlling the receiving means to receive, from the communication device, a notification related to a first radio quality of a radio link between the communication device and the first other base station device, the notification being transmitted when a failure has occurred in the radio link; and
a step of, upon receiving the notification, controlling the transmission means to transmit a first message indicating the occurrence of the failure to the first other base station device, wherein
upon receiving the first message, the first other base station device releases a connection between the first other base station device and the communication device.

34. A program for causing a computer provided in a communication device that includes transmission means and is capable of connecting to a first base station device and a second base station device simultaneously, to execute:
a step of, when a failure has occurred in a radio link to the second base station device, controlling the transmission means to transmit a notification indicating the occurrence of the failure to the first base station device, wherein transmitting the notification controls the first base station device to cause the second base station device to release a connection between the second base station device and the communication device.

35. A program for causing a computer provided in a communication device that includes transmission means and is capable of connecting to a first base station device and a second base station device simultaneously, to execute
a step of controlling the transmission means to periodically transmit, to the first base station device, a notification related to a first radio quality of a radio link to the second base station device, wherein transmitting the notification controls the first base station device to cause the second base station device to release a connection between the second base station device and the communication device when the notification indicates that the first radio quality is at or below a predetermined level.

36. A program for causing a computer provided in a communication device that includes transmission means and is capable of connecting to a first base station device and a second base station device simultaneously, to execute
a step of controlling the transmission means to transmit, when a failure has occurred in a radio link to the second base station device, to the first base station device, a notification related to a first radio quality of the radio link, wherein transmitting the notification controls the first base station device to cause the second base station device to release a connection between the second base station device and the communication device.
